# EUROPÄISCHE PATENTSCHRIFT

(11) **EP 3 870 874 B1**
(45) Veröffentlichungstag und Bekanntmachung des Hinweises auf die Patenterteilung: **21.12.2022**
(21) Anmeldenummer: 19795482.9
(22) Anmeldetag: 21.10.2019
(51) Int. Cl.: F16F 9/02, F16F 9/32, F16F 9/512, F16F 15/023, F16F 15/027

(54) **HYBRIDGASDRUCKFEDERSYSTEM SOWIE MÖBELSTÜCK MIT EINEM SOLCHEN HYBRIDGASDRUCKFEDERSYSTEM**
HYBRID GAS PRESSURE SPRING SYSTEM, AND ITEM OF FURNITURE HAVING A HYBRID GAS PRESSURE SPRING SYSTEM OF SAID TYPE
SYSTÈMES DE RESSORT À GAZ HYBRIDE AINSI QUE MEUBLE PRÉSENTANT UN TEL SYSTÈME DE RESSORT À GAZ HYBRIDE

(30) Priorität: 22.10.2018 DE 102018218022
(43) Veröffentlichungstag der Anmeldung: 01.09.2021
(73) Patentinhaber: Veyhl GmbH, 75389 Neuweiler (DE)
(72) Erfinder: BRUDER, Wolfgang, 72226 Simmersfeld-Aichhalden (DE); TIEDE, Michael, 72213 Altensteig (DE)
(74) Vertreter: Kohler Schmid Möbus Patentanwälte
(86) Internationale Anmeldenummer: PCT/EP2019/078549
(87) Internationale Veröffentlichungsnummer: WO 2020/083827

(56) Entgegenhaltungen:
- EP-A2- 0 379 864
- EP-A2- 1 965 994

## Beschreibung

Die Erfindung betrifft ein Hybridgasdruckfedersystem. Das Hybridgasdruckfedersystem weist eine Gasdruckfeder mit einem Zylinder, einer im Zylinder in Richtung einer Bewegungsachse bewegbaren Kolbenstange und eine Druckgaskammer für ein Druckgas zum Bereitstellen einer Federkraft F_{S}, mit der die Kolbenstange beaufschlagbar ist, auf.

In der Praxis haben sich Gasdruckfedern bei allen Arten des Gewichtsausgleichs bewährt und sind beispielsweise bei höhenverstellbaren Bürostühlen und Bürotischen sowie beispielsweise auch als unterstützende Öffnungs- und Haltevorrichtung von Klappen und Hauben in Fahrzeugen, Flugzeugen und Schiffen vorzufinden. Selbst im Werkzeugbau können Gasdruckfedern herkömmliche Druckfedern aus Stahl ohne Weiteres ersetzten.

Aus EP 0 379 864 A2, das als nächstliegenden Stand der Technik betrachtet ist, ist eine Gasfeder mit temperaturunabhängiger Ausschubkraft bekannt, die insbesondere als Hub- und/oder Abstützelement für einen Deckel, insbesondere eines Kraftfahrzeuges, verwendet werden kann. Die Gasfeder weist ein Gehäuse mit abgedichtet aus diesem herausgeführter Kolbenstange auf. Sein Innenraum ist mit Druckgas gefüllt. Um mit relativ einfachen Mitteln eine Konstanthaltung der Ausschubkraft über weite Temperaturbereiche zu gewährleisten, ist der Innenraum der Gasfeder über eine Verbindungsleitung mit einer Druckerzeugungs-Einheit verbunden, die mittels eines Elektromotors in Abhängigkeit von der Temperatur oder dem Druck des Gases in der Gasfeder antreibbar ist. Von einem Druckgeber in einem Druckausgleichsraum kann ein den Druck des Gases repräsentierendes Signal über eine Signalleitung an ein Steuergerät gegeben werden.

EP 1 965 994 A2 beschreibt einen pneumatisch gefederten Lenkrollenmechanismus mit einem Luftkolben, einem Luftbehälter und Luftschläuchen.

In der Praxis werden die Einsatzmöglichkeiten von Gasdruckfedern überall dort, wo diese mit wechselnden Gewichts- bzw. Axialkräften belastet werden, begrenzt. So stoßen Gasdruckfedern beispielsweise bei höhenverstellbaren Tischen, deren Tischplatte mit wechselnden Lasten durch darauf angeordnete Gegenstände beaufschlagt werden, an ihre Grenzen. Übersteigt die Belastung der Tischplatte die fix eingestellte Federkraft F_{S}, d. h. die auf die Kolbenstange in Richtung ihrer Bewegungsachse wirkende Ausschubkraft, der Gasdruckfeder, so kann die Tischhöhe häufig nur noch mit einem entsprechend großen benutzerseitigen Kraftaufwand vergrößert werden.

Aus diesem Grunde wurden Gasdruckfedern entwickelt, bei denen die Druckgaskammer mechanisch über eine Spindel und einen an die Spindel anschließbaren Akkuschrauber verkleinert werden kann, um den atmosphärischen Gasdruck innerhalb der Druckgaskammer, mithin die Federkraft der Druckgasfeder, bedarfsweise zu vergrößern. Angesichts des dazu erforderlichen Aufwands und Zeitbedarfs sind derlei Gasdruckfedern jedoch nicht in der Lage, dynamisch ändernde Lastfälle mit vertretbarem Aufwand abzubilden.

In der Praxis stellen sich diese Probleme bei elektromotorisch höhenverstellbaren Tischen natürlich nicht. Die elektromotorischen Verstellmechaniken sind jedoch relativ kostenaufwändig und erlauben eine insgesamt nur geringe Verstellgeschwindigkeit der Gewindespindel. So betragen die Verstellgeschwindigkeiten herkömmlicher Systeme häufig nur zirka 30 bis 40 Millimeter pro Sekunde. Dies reicht für viele Einsatzbereiche nicht aus.

Es ist deshalb die Aufgabe der Erfindung, ein Gasdruckfedersystem sowie ein Möbelstück mit einem Gasdruckfedersystem anzugeben, die die eingangs genannten Nachteile überwinden.

Die das Gasdruckfedersystem betreffende Aufgabe wird durch ein Hybridgasdruckfedersystem mit den in Anspruch 1 angegebenen Merkmalen gelöst. Das Möbelstück weist erfindungsgemäß die in Anspruch 8 angegebenen Merkmale auf.

Das erfindungsgemäße Hybridgasdruckfedersystem umfasst mindestens eine Gasdruckfeder mit einem Zylinder, einer im Zylinder in Richtung einer Bewegungsachse bewegbaren Kolbenstange und mit einer Druckgaskammer für ein Druckgas zum Bereitstellen einer Federkraft F_{S}, mit der die Kolbenstange beaufschlagbar ist. Derlei Gasdruckfedern sind am Markt vorkonfektioniert und kostengünstig verfügbar. Das Hybridgasdruckfedersystem weist erfindungsgemäß weiter einen Druckgasspeicher sowie einen elektrisch betätigbaren bzw. betätigten Druckverdichter auf, mittels dessen das in der Druckkammer der Gasdruckfeder enthaltene Druckgas in den Druckgasspeicher beförderbar ist. Es versteht sich, dass die Gasdruckfeder also über einen Fluidanschluss verfügt, über den das in der Druckgaskammer enthaltene Druckgas aus der Gasdruckfeder herausführbar und über den Druckverdichter dem Druckgasspeicher zuführbar ist. Die am Markt verfügbaren Gasdruckfedern sind generell mit einem solchen Fluidanschluss ausgerüstet, zumal die Gasdruckfedern herstellerseitig mit dem jeweiligen Druckgas befüllt werden müssen, um überhaupt funktionsfähig zu sein. Als Druckgasspeicher kann beispielsweise ein einfacher rohr- oder kartuschenförmiger Hohlkörper eingesetzt werden. Der Druckgasspeicher kann aus Metall, einem Verbundwerkstoff oder ggf. auch aus Kunststoff bestehen. Der Druckgasspeicher ist auslassseitig über ein ansteuerbares Auslassventil mit der Druckkammer der Gasdruckfeder fluidisch verbindbar, um das im Druckgasspeicher zwischengespeicherte bzw. bevorratete Druckgas bei Bedarf in die Druckgaskammer zu leiten. Das Hybridgasdruckfedersystem ist bezüglich des Druckmittels als ein geschlossenes System ausgebildet.

Das Hybridgasdruckfedersystem umfasst erfindungsgemäß eine Steuereinrichtung mit einem Drucksensor zum Erfassen eines in der Druckgaskammer vorherrschenden Gasdrucks P₂ des Druckgases zum Ermitteln der dazu korrespondierenden Federkraft F_{S} der Gasdruckfeder. Die Steuereinrichtung umfasst weiterhin einen Sensor zum Ermitteln einer der Federkraft F_{S} entgegen gerichteten Axialkraft F_{A}, wobei die Steuereinrichtung dazu programmiert ist, das Auslassventil und den Druckverdichter auf Grundlage der Axialkraft F_{A} derart anzusteuern, dass die Federkraft F_{S} und die Axialkraft F_{A} einander aufheben, d. h. sich im Kräftegleichgewicht befinden, oder einander im Wesentlichen aufheben, d. h. eine (Werte- bzw.) Betragsdifferenz aufweisen, die in einem vorgegebenen Differenzintervall liegt. Im letztgenannten Fall weist die aus der Federkraft F_{S} und der Axialkraft F_{A} resultierende Kraft (F_{R}) also einen vorgegebene maximalen Betrag auf. Die von der Gasdruckfeder im Einsatzfall aufzubringende Federkraft F_{S} wird bei dem erfindungsgemäßen Hybridgasdruckfedersystem mithin lastabhängig durch die Steuereinrichtung geregelt. Dadurch kann die Federkraft F_{S} der Gasdruckfeder dynamisch an den aktuellen Lastfall angepasst werden. In der Praxis kann dadurch bei gasdruckfederbetätigten höhenverstellbaren Möbelstücken, insbesondere Tischen Stühlen und Liegen, die für das Anheben der Tischplatte, des Sitzes bzw. der Liegefläche erforderliche manuelle Unterstützungskraft unabhängig von der jeweiligen Ist-Belastung der Tischplatte/des Sitzes/der Liegefläche konstant oder im Wesentlichen konstant gehalten werden.

Im Auslieferungszustand des Hybridgasdruckfedersystems sind der Druckgasspeicher und die Druckkammer jeweils mit Druckgas G gefüllt. Das Druckgas ist vorzugsweise Stickstoff. Der Gasdruck im Druckgasspeicher und der Gasdruck in der Druckgaskammer stimmen dabei vorzugsweise überein. Der Gasdruck in der Druckgaskammer weist seinen maximalen Druckwert P₂ₘₐₓ auf. Die Federkraft F_{S} der Gasdruckfeder ist somit maximal. Die Gasdruckfeder ist derart parametrisiert, dass die im Betriebseinsatz zu erwartenden Axialkräfte grundsätzlich kleiner sind, als die vorgegebene maximale Federkraft der Gasdruckfeder. Für das Einstellen des Kräftegleichgewichts oder ungefähren Kräftegleichgewichts zwischen der Federkraft F_{S} und der Axialkraft F_{S} kann somit im Betriebseinsatz Druckgas G aus der Druckgaskammer in den Druckgasspeicher überführt werden. Durch das dadurch bestehende Druckgefälle zwischen dem im Druckgasspeicher herrschenden Gasdruck und dem in der Druckgaskammer herrschenden Gasdruck kann das Druckgas bei Öffnen des Auslassventils selbstständig in die Druckgaskammer der Gasdruckfeder strömen.

Bei dem Hybridgasdruckfedersystem kann die Verstellgeschwindigkeit herkömmlicher Gasdruckfedersystemen weiterhin realisiert werden. Dadurch ist das Hybridgasdruckfedersystem für einen Einsatz bei Möbeln, wie etwa höhenverstellbaren Tischen oder auch Stühlen, prädestiniert. Auch bei einem Einsatz des Hybridgasdruckfedersystems in anderen Bereichen, beispielsweise zur Öffnungsunterstützung bzw. zum Halten von Klappen oder Hauben, etwa bei Fahrzeugen, Schiffen oder Flugzeugen, bietet das Hybridgasdruckfedersystem Vorteile. Das Hybridgasdruckfedersystem ist auch im medizinischen Sektor, etwa bei Aufstehhilfen oder bei Patientenliegen oder Fahrtragen, wie diese im Rettungsdienst und Patiententransport eingesetzt werden, von Vorteil.

Die Gasdruckfeder ist unter Sicherheitsaspekten mit einer Blockiereinheit versehen, wobei der Druckverdichter sowie das Auslassventil von der Steuereinrichtung jeweils nur bei aktivierter Blockiereinheit aktivierbar sind. Dadurch können unerwünschte und für den Benutzer unerwartete Vorhub- oder Einfahrbewegungen der Kolbenstange sowie damit bewegungsgekoppelter Bauteile zuverlässig vermieden werden. Alternativ kann die Blockierinheit nur dann gelöst werden, wenn sich die Federkraft F_{S} und die Axialkraft F_{A} einander aufheben oder deren betragsmäßige Differenz D in dem vorgegebenen Differenzintervall liegt.

Die Blockiereinheit kann nach der Erfindung einen elektromotorischen Aktor umfassen, der von der Steuereinrichtung ansteuerbar ist. Der elektromotorische Aktor kann beispielsweise als ein Linearmotor ausgeführt sein, wie dieser am Markt kostengünstig verfügbar ist. Auch ein elektromagnetischer Tauchspulen-Aktor bzw. ein Gleichstrommagnet-Hub- bzw. -Zugaktor sind vorstellbar.

Das Hybridgasdruckfedersystems erlaubt bedarfsweise sogar das Ausführen einer gesteuerten Vorhubbewegung und/oder Einschubbewegung der Kolbenstange aus dem/in den Zylinder der Gasdruckfeder. Dies ist für die Einsatzbreite des Hybridgasdruckfedersystems von Vorteil. Es versteht sich, dass die Blockiereinheit in diesem Fall durch die Steuereinrichtung in ihre die Bewegung der Kolbenstange freigebende Freigabestellung überführbar bzw. haltbar sein muss. Dies kann beispielsweise mit dem vorstehend erläuterten elektrisch betriebenen Aktor realisiert werden.

Der Druckverdichter kann nach der Erfindung insbesondere in Form eines Kolbenverdichters ausgeführt sein. Derlei Kolbenverdichter sind in der Anschaffung und auch im Unterhalt kostengünstig verfügbar und weisen eine ausreichende Langlebigkeit auf. Ein solcher Kolbenverdichter kann insbesondere als ein Doppelhubkolbenverdichter ausgeführt sein. Dadurch kann bei besonders kompakter Baugröße eine hohe Leistungsfähigkeit des Druckverdichters gewährleistet werden. Alternativ kann der Druckverdichter auch als ein Drehkolbenverdichter ausgeführt sein, der insbesondere bei einem sehr dynamisch auszulegendem Hybridgasdruckfedersystem Vorteile bieten kann.

Das erfindungsgemäße Hybridgasdruckfedersystem benötigt im Betriebseinsatz eine elektrische Energiequelle. Als elektrische Energiequelle kommt insbesondere das öffentliche Stromnetz in Betracht. Alternativ kann das Hybridgasdruckfedersystem einen elektrischen Energiespeicher umfassen, der beispielsweise in Form eines Akkumulators, einer Brennstoffzelle oder eines Kondensators mit einer entsprechenden elektrischen Kapazität ausgebildet ist.

Für den Fall, dass für den elektrisch betätigbaren Druckverdichter keine elektrische Energiequelle zur Verfügung steht, kann der Druckverdichter eine mechanische Schnittstelle für den Anschluss einer (Hand-)Kurbel oder eines Akkuschraubers aufweisen. Dadurch kann überbrückungsweise die Funktionalität des Hybridgasdruckfedersystems aufrecht erhalten werden.

Im Hinblick auf eine möglichst einfache und kostengünstige Fertigung sowie eine vereinfachte Montage des Hybridgasdruckfedersystems am Einsatzort bilden der Druckverdichter und die Gasdruckfeder nach der Erfindung vorzugsweise eine gemeinsam handhabbare Baueinheit. Ganz besonders bevorzugt weisen diese Bauteile ein gemeinsames Gehäuse auf. Dadurch kann zudem Fehlinstallationen des Hybridgasdruckfedersystems entgegengewirkt werden.

Der Drucksensor zum Erfassen des in dem Druckspeicher zu einem Messzeitpunkt jeweilig herrschenden atmosphärischen Gasdrucks P₂ des Druckgases G kann nach der Erfindung insbesondere als ein Absolutdrucksensor ausgeführt sein. Zu beachten ist, dass der Drucksensor grundsätzlich auch als ein Differenzdrucksensor bzw. ein bidirektional-differentieller Drucksensor ausgeführt sein kann, die kostengünstig in geeigneten Auslegungen am Markt erhältlich sind.

Der Sensor zum Ermitteln des der Federkraft F_{S} entgegen gerichteten Axialkraft F_{A} kann beispielsweise ein Piezoelektrischer Drucksensor oder ein Drucksensor in Form eines Biegebalkens sein.

Das Druckgas kann nach der Erfindung insbesondere Stickstoff sein. Auch andere Gase, insbesondere Inertgase, können je nach Bedarf und Anforderungsprofil eingesetzt werden.

Das erfindungsgemäße Möbelstück kann beispielsweise als ein (Büro-) Tisch, eine Werkbank oder auch als ein höhenverstellbarer Stuhl mit einem vorstehend erläuterten Hybridgasdruckfedersystem ausgeführt sein oder eine Klappe aufweisen, die mit der Gasdruckfeder eines vorstehend erläuterten Hybridgasdruckfedersystems bewegungsgekoppelt ist.

In dazu entsprechender Weise kann das Hybridgasdruckfedersystem bei Fahrzeugen wie Personenkraftwagen, Lastkraftwagen oder auch Agrarmaschinen, Schiffen sowie Flugzeugen eingesetzt werden, um die Öffnung einer Klappe oder einer (Motor- bzw. Abdeck-) Haube zu unterstützen und in ihrer Offenstellung abzustützen. Das erfindungsgemäße Hybridgasdruckfedersystem kann darüber hinaus auch bei Patientenliegen oder Fahrtragen, wie diese im Rettungsdienst und Patiententransport eingesetzt werden, verwendet werden. Ein weiterer Einsatzbereich sind Aufstehhilfen, mittels derer eingeschränkt bewegungsfähigen Personen das Aufstehen aus einer tiefen Sitz- oder Liegeposition ermöglicht oder erleichtert wird.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

In der Zeichnung zeigen:
- Fig. 1: ein Blockschaltbild eines Hybridgasdruckfedersystems, bei dem die Federkraft F_{S} der Gasdruckfeder in Abhängigkeit von einer auf die Kolbenstange einwirkenden und der Federkraft entgegengerichteten Axialkraft F_{S} steuerbar bzw. regelbar ist;
- Fig. 2: eine schematisierte Darstellung eines Hybridgasdruckfedersystems, bei dem die einzelnen Baugruppen als eine gemeinsam handhabbare Baueinheit ausgeführt sind;
- Fig. 3: ein Möbelstück in Form eines höhenverstellbaren Tischs mit einem Hybridgasdruckfedersystem in einer teilweise geschnittenen Darstellung;
- Fig. 4: das Möbelstück gemäß Fig. 3 in einer Ansicht von unten; und
- Fig. 5: ein Fahrzeug mit einer Klappe und einem Hybridgasdruckfedersystem zur Öffnungsunterstützung der Klappe sowie zum Offenhalten der Klappe.

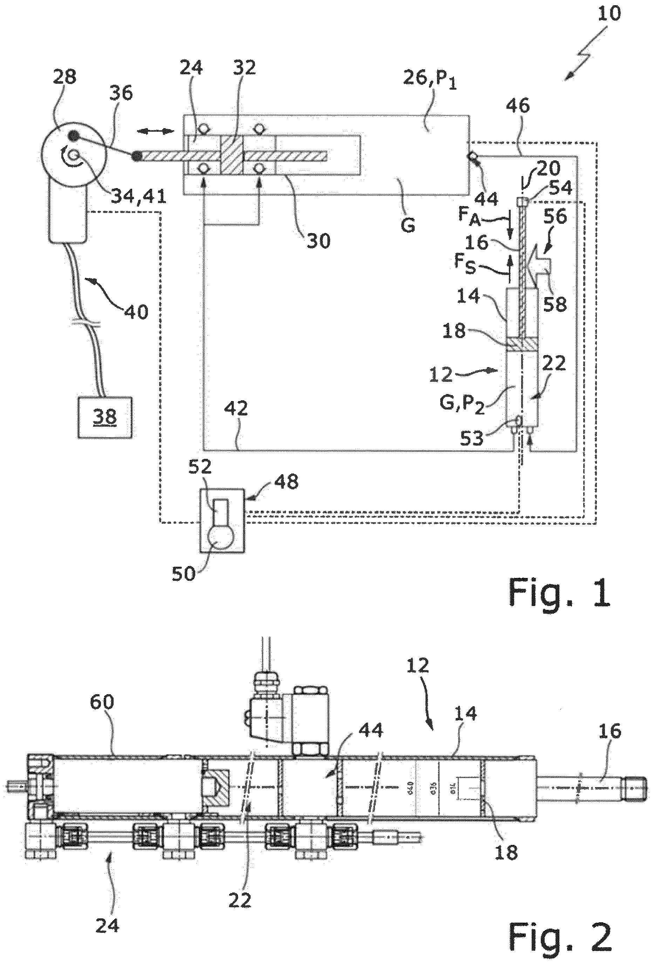

**Figur 1** zeigt ein Funktionsschaubild eines Hybridgasdruckfedersystems **10.** Das Hybridgasdruckfedersystem 10 umfasst eine Gasdruckfeder **12** an sich bekannter Bauart mit einem Zylinder **14,** einer Kolbenstange **16** mit einem Kolben **18,** der im Zylinder 14 in Richtung einer Bewegungsachse **20** bewegbar gelagert ist. Im Zylinder 14 ist eine Druckgaskammer **22** für ein Druckgas **G** ausgebildet. Das Druckgas G dient dem Bereitstellen einer Federkraft F_{S}, mit der die Kolbenstange 16 der Gasdruckfeder 12 in einer zur Bewegungsachse 20 axialen Richtung beaufschlagbar ist. Die Federkraft F_{S} ist mithin in Vorhubrichtung der Kolbenstange 16 gerichtet.

Das Hybridgasdruckfedersystem 10 umfasst weiter einen elektromotorisch betriebenen Druckverdichter **24** und einen Druckgasspeicher **26.** Zum Betrieb des Druckverdichters 24 dient ein Elektromotor **28.** Der Druckverdichter 24 ist hier rein beispielhaft als ein Doppelhubkolben-Verdichter mit einem in einem Verdichterrohr **30** geführten Doppelhubkolben **32** ausgeführt. Der Doppelhubkolben 32 ist mit der Antriebswelle **34** des Elektromotors 28 über ein Pleuel **36** gekoppelt. Zum Anschließen des Elektromotors 28 an eine elektrische Energiequelle **38** dient eine elektrische Anschlussleitung **40.** Die elektrische Energiequelle 38 ist im einfachsten Fall durch das öffentliche Stromversorgungsnetz gebildet. Alternativ kann die elektrische Energiequelle 38 auch als eine Batterie, ein Akkumulator oder als eine Brennstoffzelle ausgebildet sein. Der Druckverdichter 24 weist eine Schnittstelle **41** für den Anschluss einer Handkurbel oder auch eines Akkuschraubers auf, die beispielsweise durch die Antriebswelle des Elektromotors gebildet sein kann. Dadurch kann die Funktionalität des Hybridgasdruckfedersystems 10 im Falle eines Ausfalls der elektrischen Energiequelle 38 zumindest überbrückend aufrecht erhalten werden.

Es versteht sich, dass der elektromotorische Druckverdichter 24 auch in Form eins Einfachhubkolbenverdichters oder eines Kreiskolbenverdichters ausgeführt sein kann. Die jeweilige Bauart des Druckverdichters 24 richtet sich unter anderem nach den tatsächlichen technischen Einsatzbedingungen sowie der Baugröße des Hybridgasdruckfedersystems 10.

Der Druckverdichter 24 ist über eine erste Gasleitung **42** mit der Druckgaskammer 22 der Gasdruckfeder 12 fluidisch verbunden. Der Druckverdichter 24 dient dazu, das in der Druckkammer 22 enthaltene Druckgas G bei Bedarf in den Druckgasspeicher 26 zu befördern. Der Druckgasspeicher 26 und auch der Druckverdichter 24 können jeweils oder gemeinsam als ein zu der Gasdruckfeder 12 separates Bauteil ausgeführt sein. Zu beachten ist, dass der atmosphärische Gasdruck **P₁** im Inneren des Druckgasspeichers 26 zu jedem Zeitpunkt immer gleich oder größer als der atmosphärische Gasdruck **P₂** in der Druckgaskammer 22 ist.

Der Druckgasspeicher 26 ist auslassseitig über ein ansteuerbares Auslassventil **44** und eine weitere Gasleitung **46** mit der Druckgaskammer 22 der Gasdruckfeder 12 fluidisch verbindbar, um das im Druckgasspeicher 26 bevorratete Druckgas G bei Bedarf aus dem Druckgasspeicher 26 in die Druckkammer 22 zu leiten.

Zum Ansteuern des Druckverdichters 24 sowie des Auslassventils 44 dient eine Steuereinrichtung **48.** Die Steuereinrichtung 48 weist hier eine Recheneinheit **50** und einen der Recheneinheit 50 zugeordneten elektronischen Speicher **52** auf. Im Speicher 52 können eine Betriebssoftware sowie eine Anwendungssoftware (nicht gezeigt) abgespeichert sein.

Die Steuereinrichtung 48 umfasst einen Drucksensor **53** zum Ermitteln bzw. messtechnischen Erfassen des in der Druckgaskammer 22 herrschenden Gasdrucks P₂ des Druckgases D mittels dessen die zum Gasdruck P2 jeweils korrespondierende Federkraft F_{S} seitens der Steuereinrichtung 48 ermittelbar ist. Der Drucksensor kann insbesondere als ein sogenannter Absolutdrucksensor ausgeführt sein.

Die Steuereinrichtung 48 umfasst weiter einen Sensor **54** zum Ermitteln einer der Federkraft F_{S} der Gasdruckfeder 12 entgegengerichtet wirkenden Axialkraft **F_{A}.** Der Sensor 54 dient mit anderen Worten dazu, die Ist-Belastung der Gasdruckfeder 12 zu erfassen.

Der Sensor 54 kann insbesondere als ein piezoelektrisches Element, z.B. ein Drucksensor, oder als ein Biegebalken-Kraftsensor ausgeführt sein, mit dem die der Federkraft F_{S} entgegen gerichteten Axialkraft F_{A} messtechnisch erfassbar ist.

Die Steuereinrichtung 48 ist dazu programmiert, das Auslassventil 44 und den Druckverdichter 24 auf Grundlage der von dem Sensor 54 bereitgestellten Messinformationen derart anzusteuern, dass sich die in der Druckgaskammer 22 auf die Kolbenstange 16, genauer den Kolben 18, ausgeübte Federkraft F_{S} und die der Federkraft F_{S} entgegen gerichtete Axialkraft F_{A} einander aufheben, d. h. im Kräftegleichgewicht befinden, oder dass die Federkraft F_{S} und die Axialkraft F_{A} eine Betragsdifferenz D = F_{A} - F_{S} aufweisen, die in einem vorgegebenen Differenzintervall liegt bzw. einen vorgegebenen maximale Betrag aufweist. In diesem Fall ist der Betrag der aus der Federkraft F_{S} und der Axialkraft F_{A} resultierenden Kraft F_{R} also größer als Null. Die auf die Kolbenstange wirkende resultierende Kraft kann in Vorhubrichtung oder in Einschubrichtung der Kolbenstange gerichtet sein. Das vorgegebene Differenzintervall kann beispielsweise in der Speichereinheit 52 hinterlegt, d.h. abgespeichert sein. Es versteht sich, dass das vorgenannte Differenzintervall vorteilhaft variabel veränderbar ist, um das Hybridgasdruckfedersystem 10 an unterschiedliche Aufgabenstellungen adaptieren zu können.

Der Gasdruckfeder 12 ist aus Sicherheitsgründen eine Arretier- oder Blockiereinheit **56** zugeordnet, durch die die Kolbenstange 16 in ihrer jeweiligen axialen Position relativ zum Zylinder 14 der Gasdruckfeder 12 festsetzbar ist. Die Blockiereinheit 56 kann einen elektrisch betätigbaren Aktor **58,** beispielsweise in Form eines Linearmotors oder eines elektromagnetischen Tauchspulen-Aktors bzw. ein Gleichstrommagnet-Hub- bzw. -Zugaktors umfassen. Die Steuereinrichtung 48 und die Blockiereinheit 56 wirken derart zusammen, dass eine Ansteuerung des Auslassventils 44 bzw. des Druckverdichters 24 nur bei aktivierter Blockiereinheit 56, d. h. bei einer blockierten Kolbenstange 16 möglich ist. Dies kann beispielsweise dadurch erreicht werden, dass die Steuereinrichtung 48 dazu programmiert ist, die Blockiereinheit 56 bzw. deren Aktor 58 vorab eines Ansteuerns des Auslassventils 44/des Druckverdichters 24 in die die Vestellbewegung der Kolbenstange 16 blockierende Blockierstellung zu überführen.

Die Blockiereinheit 56 ist alternativ nur dann entsperrbar, d. h. in ihren die axiale Verstellung der Kolbenstange 16 relativ zum Zylinder 14 freigebenden Betriebszustand überführbar, wenn sich die Federkraft F_{S} und die Axialkraft F_{A} einander aufheben bzw. deren betragsmäßige Differenz D in dem vorgegebenen Differenzintervall liegt. Mit anderen Worten ist die Blockiereinheit 56 nur dann entsperrbar, wenn die Gasdruckfeder 12 die Axialkraft F_{S} im Wesentlichen kompensiert.

Im Auslieferungszustand des Hybridgasdruckfedersystems 10 sind der Druckgasspeicher und die Druckgaskammer 22 jeweils mit Druckgas G gefüllt. Der Gasdruck P₁ im Druckgasspeicher 26 und der Gasdruck P₂ in der Druckgaskammer 22 stimmen überein. Der Gasdruck P₁, P₂ kann seinen maximalen Druckwert P₂ₘₐₓ aufweisen. Die Federkraft F_{S} der Gasdruckfeder ist somit maximal. Die Gasdruckfeder 12 ist derart parametrisiert, dass die im Betriebseinsatz zu erwartenden Axialkräfte F_{A} grundsätzlich kleiner sind, als die vorgegebene maximale Federkraft F_{S} der Gasdruckfeder 12.

Für das Einstellen des Kräftegleichgewichts oder ungefähren Kräftegleichgewichts zwischen der Federkraft F_{S} und der Axialkraft F_{S} kann somit Druckgas G aus der Druckgaskammer 22 in den Druckgasspeicher 26 überführt werden.

Die Federkraft F_{S} der Gasdruckfeder 12 kann dann durch Regeln des Gasdrucks P₂ in der Druckgaskammer 22 jeweils auf eine der Ist-Axialkraft F_{A} entsprechende oder im Wesentlichen entsprechende Größe dynamisch eingestellt werden.

Gemäß **Fig. 2** kann das Hybridgasdruckfedersystem 10 als eine einzelne Baueinheit realisiert sein. Dadurch kann die Montage des Hybridgasdruckfedersystems 10 vereinfacht und ggf. existierende einfache Gasdruckfedern 12 durch das Hybridgasdruckfedersystem 10 ersetzt werden. Gemäß Fig. 2 können die Gasdruckfeder 12 sowie der Druckverdichter 24 und der Druckgasspeicher 26 in einer zur Bewegungsachse 20 der Kolbenstange 16 der Gasdruckfeder 12 axialen Richtung hintereinanderliegend angeordnet sein. Die einzelnen Baugruppen sind dabei vorzugsweise lösbar miteinander mechanisch verkoppelt, um eine ggf. erforderlich werdende Wartung bzw. einen Austausch einzelner Baugruppen zu vereinfachen. Die vorgenannten Baugruppen können auch in einem gemeinsamen Gehäuse **60** untergebracht sein.

Das Hybridgasdruckfedersystem 10 erlaubt eine bedarfsgerechte Anpassung der Federkraft F_{S} der Gasdruckfeder 12 an die von der Gasdruckfeder 12 jeweilig aufzunehmende Last. Das Hybridgasdruckfedersystem 10 weist dadurch breite technische Einsatzmöglichkeiten auf.

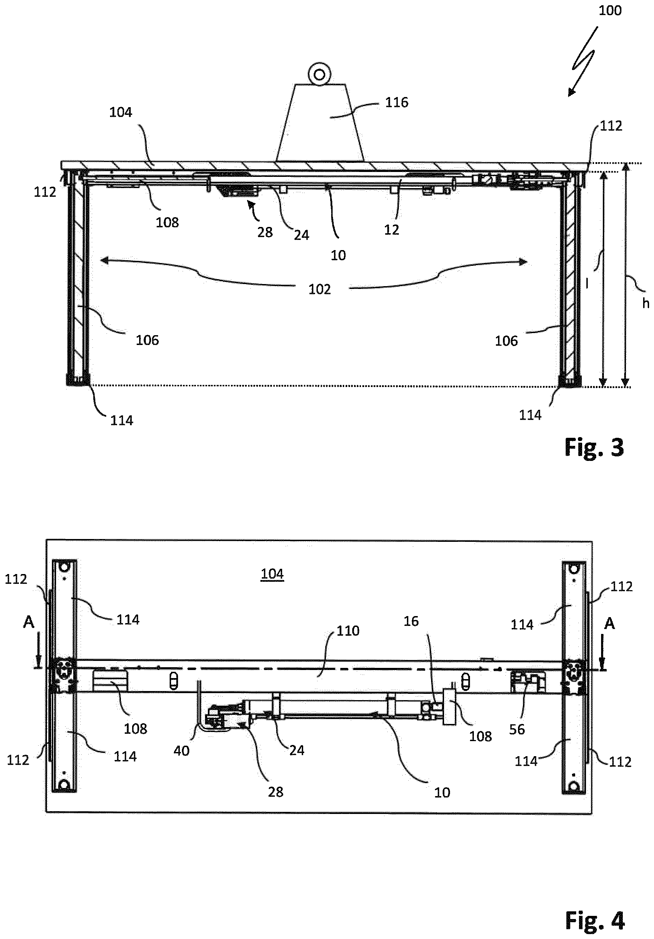

In den **Fign. 3** und **4** ist ein Möbelstück 100 in Form eines höhenverstellbaren Tischs mit einem Hybridgasdruckfedersystem 10 gezeigt, dessen Funktionsweise dem Hybridgasdruckfedersystem 10 gemäß Fig. 1 entspricht. Der Tisch weist ein Tischgestell **102** mit einer auf dem Tischgestell 102 montierten Tischplatte 104 auf. Das Tischgestell 102 umfasst hier rein beispielhaft mehrere teleskopierbare Tischbeine **106,** die in ihrer Auszugslänge I synchronisiert verstellbar sind. Die Tischbeine 106 sind über eine Synchronmittel **108,** hier eine Synchronwelle, miteinander zwangsweise bewegungsgekoppelt. Gemäß Fig. 2 können die Tischbeine 106 über eine sogenannte Quertraverse 110 miteinander verbunden sein. An den Tischbeinen 106 bzw. an der Quertraverse 110 können Tischplattenausleger **112** angeordnet sein, um die Tischplatte 104 am Tischgestell 102 suffizient abzustützen. Die Tischbeine 106 können beispielsweise kufenartige Tischfüße **114** aufweisen und in T- Form oder in C-Form ausgeführt sein.

Das Hybridgasdruckfedersystem 10 dient analog zu den aus der Praxis bekannten Gasdruckfedern einer vereinfachten Höhenverstellung des Möbelstücks 100. Die Gasdruckfeder 12 bietet einerseits eine Haltefunktion für die Tischplatte 104 in ihrer jeweilig eingestellten vertikalen Höhe h, insbesondere auch bei entriegelter Blockiereinheit 56 (vgl. Fig. 1), sofern denn vorhanden. Die Gasdruckfeder 12 ist in an sich bekannter Weise einenends, bevorzugt mit ihrer Kolbenstange 16, mit dem Synchronmittel 108 bewegungsgekoppelt.

Die Federkraft F_{S} (Fig. 1) der Gasdruckfeder 12 des Hybridgasdruckfedersystems 10 wird durch die Steuereinrichtung 48 in Abhängigkeit von der auf die Gasdruckfeder 12 einwirkenden Axialkraft F_{A} (Fig. 1), die durch die Gesamtmasse von auf dem Möbelstück 100, hier der Tischplatte 104, angeordneten Gegenständen 116 mitbestimmt ist und sich proportional zu dieser ändert, geregelt. Dadurch kann gewährleistet werden, dass die Tischplatte 104 - bei in Freigabestellung angeordneter Blockiereinheit 56 - von der Gasdruckfeder 12 unabhängig von ihrer jeweiligen vertikalen Position in der Schwebe gehalten wird. Zur Höhenverstellung des Tischs ist damit unabhängig von der jeweiligen Belastung der Tischplatte 104 benutzerseitig immer ein gleichbleibender Kraftaufwand erforderlich.

Die Hybridgasdruckfedersystem 10 kann gleichermaßen bei anderen Möbelstücken 100, insbesondere solchen mit einer mit mindestens einer Gasdruckfeder 12 versehenen Möbelklappe und dergleichen eingesetzt werden. Ein weiteres Einsatzgebiet für das Hybridgasdruckfedersystem 10 sind Kraftfahrzeuge, Schiffe oder auch Flugzeuge, bei denen Klappen oder Hauben mit einer Gasdruckfeder zum Offenhalten bzw. Dämpfen der Vestellbewegung der Klappe versehen werden sollen.

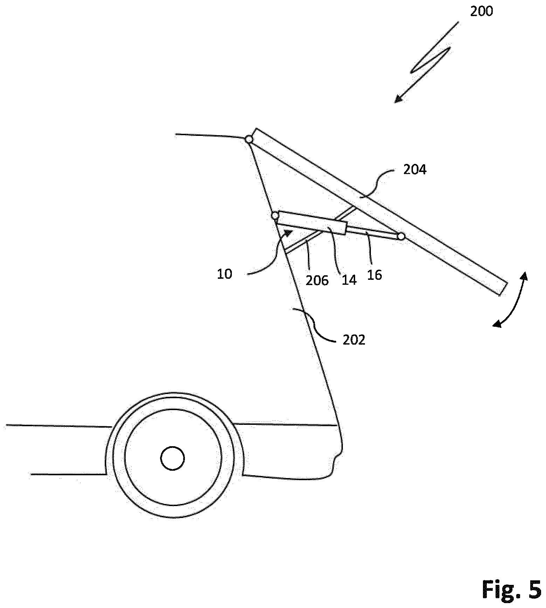

In **Fig.** 5 ist beispielhaft eine Kraftfahrzeug **200** mit einer an der Karosserie **202** angelenkten Haube oder (Heck-)Klappe **204** gezeigt, die mit einem vorstehend im Zusammenhang mit Fig. 1 bzw. Fig. 2 erläuterten Hybridgasdruckfedersystem 10 versehen ist. Unabhängig von einer auf der Klappe 204 einwirkenden Schneelast bzw. der Gesamtmasse von auf der mit der Klappe 204 bewegungsgekoppelten Hutablage 206 angeordneten Gegenständen kann die Klappe 204 im Schwebegleichgewicht gehalten werden, sodass diese weder zu schnell aufgehen noch zufallen kann.

## Patentansprüche

1. Hybridgasdruckfedersystem (10) umfassend:
- eine Gasdruckfeder (12) mit einem Zylinder (14), mit einer im Zylinder (14) in Richtung einer Bewegungsachse (16) bewegbar angeordneten Kolbenstange (16) und mit einer Druckgaskammer (22) für ein Druckgas (G) zum Bereitstellen einer Federkraft (Fₛ), mit der die Kolbenstange (16) beaufschlagbar ist;
- einen Druckgasspeicher (26);
- einen elektrisch betätigbaren Druckverdichter (24), mittels dessen das in der Druckgaskammer (22) enthaltene Druckgas (G) in den Druckgasspeicher (26) beförderbar ist;
- ein ansteuerbares Auslassventil (44), über das der Druckgasspeicher (26) mit der Druckgaskammer (22) fluidisch verbindbar ist, um das Druckgas (G) aus dem Druckgasspeicher (26) in die Druckgaskammer (22) zu leiten; und
- eine Steuereinrichtung (48) mit einem Drucksensor (53) zum Erfassen eines in der Druckgaskammer (22) jeweils vorherrschenden Gasdrucks (P₂) des Druckgases (G) zum Ermitteln der dem Gasdruck (P₂) entsprechenden Federkraft (F_{S}) und mit einem Sensor (54) zum Ermitteln einer der Federkraft (F_{S}) entgegen gerichteten Axialkraft (F_{A}), wobei die Steuereinrichtung (48) dazu programmiert ist, das Auslassventil (44) und den Druckverdichter (24) auf Grundlage der ermittelten Axialkraft (F_{A}) derart anzusteuern, dass sich die Federkraft (F_{S}) und die Axialkraft (F_{A})
im Kräftegleichgewicht befinden oder eine Wertedifferenz aufweisen, die in einem vorgegebenen Differenzintervall liegt; und wobei die Gasdruckfeder (12) mit einer Blockiereinheit (56) versehen ist und der Druckverdichter (24) sowie das Auslassventil (44) von der Steuereinrichtung (56) nur bei aktivierter Blockiereinheit (56) ansteuerbar sind oder die Blockiereinheit (56) nur dann gelöst werden kann, wenn sich die Federkraft (F_{S}) und die Axialkraft (F_{A}) einander aufheben oder deren betragsmäßige Differenz (D) in dem vorgegebenen Differenzintervall liegt.

2. Hybridgasdruckfedersystem (10) gemäß Anspruch 1, **dadurch gekennzeichnet, dass** die Blockiereinheit (56) einen elektromotorischen Aktor (58) umfasst, der von der Steuereinrichtung (48) ansteuerbar ist.

3. Hybridgasdruckfedersystem (10) gemäß Patentanspruch 1, **dadurch gekennzeichnet, dass** der Druckverdichter (24) ein Kolbenverdichter oder ein Drehkolbenverdichter ist.

4. Hybridgasdruckfedersystem (10) gemäß Anspruch 1, **dadurch gekennzeichnet, dass** der Druckverdichter (24) und die Gasdruckfeder (12) eine gemeinsame Baueinheit bilden und ein gemeinsames Gehäuse (60) aufweisen.

5. Hybridgasdruckfedersystem (10) gemäß einem der vorhergehenden Ansprüche, **dadurch gekennzeichnet, dass** der Sensor (54) ein Druck-/ Kraftsensor ist, mittels dessen die der Federkraft (F_{S}) entgegenwirkende Axialkraft (F_{A}) erfassbar ist.

6. Möbelstück (100) mit einem Hybridgasdruckfedersystem (10), das nach einem der vorhergehenden Ansprüche ausgebildet ist.

7. Möbelstück (100) nach Anspruch 6, **dadurch gekennzeichnet, dass** das Möbelstück ein höhenverstellbarer Tisch ist.

8. Möbelstück (100) nach Anspruch 6 oder 7, **dadurch gekennzeichnet, dass** der Sensor (54) in Form eines Biegebalkens ausgebildet ist.

## Claims

1. A hybrid gas pressure spring system (10) comprising:
- a gas pressure spring (12) having a cylinder (14), a piston rod (16) arranged in the cylinder (14) so as to be movable in the direction of a movement axis (16), and a pressurized gas chamber (22) for a pressurized gas (G) for providing a spring force (F_{S}) by means of which the piston rod (16) can be acted upon;
- a pressurized gas store (26);
- an electrically actuatable pressure compressor (24), by means of which the pressurized gas (G) contained in the pressurized gas chamber (22) can be conveyed into the pressurized gas store (26);
- a controllable outlet valve (44), via which the pressurized gas store (26) can be fluidically connected to the pressurized gas chamber (22) in order to conduct the pressurized gas (G) from the pressurized gas store (26) into the pressurized gas chamber (22); and
- a control device (48) having a pressure sensor (53) for detecting a gas pressure (P₂) of the pressurized gas (G) prevailing in each case in the pressurized gas chamber (22) in order to determine the spring force (F_{S}) corresponding to the gas pressure (P₂), and having a sensor (54) for determining an axial force (F_{A}) directed counter to the spring force (F_{S}),
wherein
the control device (48) is programmed to control the outlet valve (44) and the pressure compressor (24) on the basis of the determined axial force (F_{A}) such that the spring force (F_{S}) and the axial force (F_{A}) are in force equilibrium or have a difference in value in a predetermined difference interval; and wherein the gas pressure spring (12) is provided with a blocking unit (56), and the pressure compressor (24) and the outlet valve (44) can be actuated by the control device (56) only when the blocking unit (56) is activated, or the blocking unit (56) can only be released when the spring force (F_{S}) and the axial force (F_{A}) cancel each other out or the difference (D) of absolute values thereof is in the predetermined difference interval.

2. The hybrid gas pressure spring system (10) according to claim 1, **characterized in that** the blocking unit (56) comprises an electromotive actuator (58) which can be controlled by the control device (48).

3. The hybrid gas pressure spring system (10) according to claim 1, **characterized in that** the pressure compressor (24) is a piston compressor or a rotary piston compressor.

4. The hybrid gas pressure spring system (10) according to claim 1, **characterized in that** the pressure compressor (24) and the gas pressure spring (12) form a common structural unit and have a common housing (60).

5. The hybrid gas pressure spring system (10) according to any of the preceding claims, **characterized in that** the sensor (54) is a pressure/force sensor by means of which the axial force (F_{A}) counteracting the spring force (F_{S}) can be detected.

6. An item of furniture (100) having a hybrid gas pressure spring system (10) according to any of the preceding claims.

7. The item of furniture (100) according to claim 6, **characterized in that** the piece of furniture is a height-adjustable table.

8. The item of furniture (100) according to claim 6 or claim 7, **characterized in that** the sensor (54) is designed in the form of a bending beam.

## Revendications

1. Système hybride (10) à ressort pneumatique, comprenant :
- un ressort pneumatique (12) incluant un cylindre (14), une tige (16) de piston logée dans ledit cylindre (14) avec mobilité dans la direction d'un axe de mouvement (16), et une chambre (22) à gaz comprimé, destinée à un gaz comprimé (G) conçu pour fournir une force élastique (F_{S}) par laquelle ladite tige (16) de piston peut être sollicitée ;
- un accumulateur (26) de gaz comprimé ;
- un compresseur (24) actionnable électriquement, au moyen duquel le gaz comprimé (G), renfermé par ladite chambre (22) à gaz comprimé, peut être convoyé pour affluer dans ledit accumulateur (26) de gaz comprimé ;
- une vanne de sortie (44) pilotable, par l'intermédiaire de laquelle l'accumulateur (26) de gaz comprimé peut être mis en liaison fluidique avec la chambre (22) à gaz comprimé, de manière à guider le gaz comprimé (G) vers ladite chambre (22) à gaz comprimé, en provenance dudit accumulateur (26) de gaz comprimé ; et
- un dispositif de commande (48) comportant un capteur de pression (53) affecté à la détection d'une pression (P₂) du gaz comprimé (G) prédominant respectivement dans la chambre (22) à gaz comprimé, en vue de spécifier la force élastique (F_{S}) correspondant à ladite pression gazeuse (P₂), et un capteur (54) affecté à la spécification d'une force axiale (F_{A}) dirigée à l'opposé de ladite force élastique (F_{S}), sachant que
ledit dispositif de commande (48) est programmé pour piloter la vanne de sortie (44) et le compresseur (24), sur la base de la force axiale (F_{A}) spécifiée, de façon telle que ladite force élastique (F_{S}) et ladite force axiale (F_{A}) soient en équilibre, ou présentent une différence de valeurs située dans un intervalle différentiel préétabli ; et sachant que le ressort pneumatique (12) est muni d'une unité de blocage (56) et que ledit compresseur (24) ainsi que ladite vanne de sortie (44) peuvent être pilotés, par ledit dispositif de commande (56), uniquement lorsque l'unité de blocage (56) est activée, ou bien que ladite unité de blocage (56) peut être relâchée uniquement lorsque ladite force élastique (F_{S}) et ladite force axiale (F_{A}) s'annulent mutuellement ou lorsque la différence (D), entre leurs valeurs, se situe dans ledit intervalle différentiel préétabli.

2. Système hybride (10) à ressort pneumatique, selon la revendication 1, **caractérisé par le fait que** l'unité de blocage (56) inclut un actionneur électromotorisé (58) pouvant être piloté par le dispositif de commande (48).

3. Système hybride (10) à ressort pneumatique, selon la revendication 1, **caractérisé par le fait que** le compresseur (24) est un compresseur à piston, ou un compresseur à piston rotatif.

4. Système hybride (10) à ressort pneumatique, selon la revendication 1, **caractérisé par le fait que** le compresseur (24) et le ressort pneumatique (12) forment une unité structurelle commune et présentent un boîtier commun (60).

5. Système hybride (10) à ressort pneumatique, selon l'une des revendications précédentes, **caractérisé par le fait que** le capteur (54) est un capteur de pression/force, au moyen duquel peut être détectée la force axiale (F_{A}) agissant en opposition à la force élastique (F_{S}).

6. Article d'ameublement (100) équipé d'un système hybride (10) à ressort pneumatique réalisé en conformité avec l'une des revendications précédentes.

7. Article d'ameublement (100) selon la revendication 6, **caractérisé par le fait que** ledit article d'ameublement est une table réglable en hauteur.

8. Article d'ameublement (100) selon la revendication 6 ou 7, **caractérisé par le fait que** le capteur (54) est réalisé sous la forme d'une barrette de flexion.
